# EUROPEAN PATENT APPLICATION

(11) **EP 4 563 928 A1**
(43) Date of publication of application: **04.06.2025**
(21) Application number: 23213453.6
(22) Date of filing: 30.11.2023
(51) Int. Cl.: F28D 20/00

(54) **HEAT STORAGE SYSTEM AND PROCESS FOR OPERATING THE HEAT STORAGE SYSTEM**

(71) Applicant: BASF SE, 67056 Ludwigshafen am Rhein (DE)
(72) Inventor: Reifegerste, Simon, 67056 Ludwigshafen am Rhein (DE); Breitkreuz, Christian Frederik, 67056 Ludwigshafen am Rhein (DE); Meyer-Kirschner, Julian, 67056 Ludwigshafen am Rhein (DE)
(74) Representative: Kudla, Karsten

(57) **Abstract**

The invention relates to a heat storage system comprising at least one heat source, a tank farm (3) with at least two tanks (17), and at least one heat sink, wherein in the tanks (17) fluid products and/or raw materials are stored and each tank (17) comprises a heat exchange device (19), wherein the at least one heat source, the at least one heat sink and the heat exchange devices (19) are connected in one temperature control circuit (5), wherein at least one heat source or at least one heat sink is a process apparatus (7). The invention further relates to a process for operating the heat storage system.

## Description

The invention relates to a heat storage system comprising at least one heat source, a tank farm with at least two tanks, and at least one heat sink, wherein in the tanks fluid products and/or raw materials are stored and each tank comprises a heat exchange device, wherein the at least one heat source, the at least one heat sink and the heat exchange devices are connected in one temperature control circuit.

Particularly in chemical processes large amounts of thermal energy are generated, e.g. in exothermic reactions, or dissipated. The generated heat must be discharged, for example by using a heat exchanger for cooling. Particularly during exothermic batch processes, usually large amounts of thermal energy are generated in a discontinuous manner, which cannot be used in a process in which devices have to be supplied with heat continuously or in cases where the heat recovery system needs to be operated continuously or if heat generation and heat demand are time shifted. Presently, in this case a heat storage may be used which allows for using the heat at a different time than at its generation. Thermal energy can be stored for example by heating up a storage medium or by changing the phase of state of a material (latent heat) or both.

Such a heat storage system using a latent heat storage medium is disclosed for example in US- A 2011/0146940. Presently, such heat storage systems are used, for example, for storing heat generated by solar energy for producing hot water at times when not sufficient solar power is available.

Presently, heat which is generated in industrial processes, usually is dissipated and optionally used, for example, for generating steam or in a heat integration system, in which for example heat generated in a process is used for preheating feed streams. If heat is stored, usually separate heat storage is provided. Using a single heat storage unit has the disadvantage, that it is difficult to store heat at different temperature levels. This may be avoided for example by segmentation or using a stratified storage, which in turn reduces the capacity at the different temperature levels. If using only one temperature level, large storage capacities can be achieved, but at the tradeoff of either using a high storage temperature level, leading to a loss of a large proportion of the thermal energy output of the plant, or a low storage temperature level, leading to a higher amount of energy stored but a loss in exergy. Providing large capacities for heat storage at different temperature levels generally results in equipment expenditure necessary for providing the respective heat storages.

Therefore, it is an object of the present invention to provide a heat storage system which does not have the disadvantages of the present heat storages.

This object can be achieved by a heat storage system comprising at least one heat source, a tank farm with at least two tanks, and at least one heat sink, wherein in the tanks fluid products and/or raw materials are stored and each tank comprises a heat exchange device, wherein the at least one heat source, the at least one heat sink and the heat exchange devices are connected in one temperature control circuit, wherein at least one heat source or at least one heat sink is a process apparatus.

Particularly in chemical industry fluid products or feed material are stored in tanks which generally are located in so-called tank farms, an area on the site where the tanks are located. Since different fluids may be stored in the tanks, the tanks usually also may have different temperatures, depending on the fluid stored in the tank. Generally, the temperature in each tank is set such that the fluid keeps its phase, for example liquid or gaseous and is stored at a predefined viscosity to achieve optimal conditions for use of the fluid in a process or for further transportation.

The temperature of the fluid in the tank generally is in a range from -200 to 800 °C, preferably in a range from -100 to 250 °C, more preferred in a range from 0 to 200 °C and particularly in a range from 50 to 100 °C. The fluid can be any liquid or gas, preferably liquid, that can be stored in tanks.

For using the fluid in a tank as a heat storage, it further may be possible to heat or cool the fluid to a temperature different from the usual storage temperature, as long as the temperature to which the fluid is heated or cooled is in a range in which the properties of the fluid remain as needed for further use of the fluid and which has no undesirable effect on the fluid, for example due to undesired chemical reactions.

Since the fluids in the tanks of the tank farm usually need to be heated or cooled and a heating or cooling system is used for the tank farm, the inventive heat storage system has the advantage, that no separate heating or cooling system must be used but that for heating and/or cooling of the tanks in the tank farm the heat is used which is generated in processes carried out on the industrial site or which is used in such processes. For this purpose, the inventive heat storage system is particularly suitable on industrial sites which combine production plants and at least one tank farm.

Using the tanks of a tank farm as heat storage has the additional advantage that due to the usual size of such tanks large amounts of fluid are stored in the tanks which can be used as heat storage medium. Usually, tanks of a tank farm have a volume of up to 5000 m³, generally a volume in a range from 0.1 to 2500 m³, more preferred in a range from 20 to 1000 m³ and particularly in a range from 50 to 500 m³.

For using different temperature levels, it is further preferred, if the industrial site comprises a plurality of production plants in which production processes take place and in which different products, which are stored at different temperatures, are produced. Particularly for use with different production plants or for storing different fluids, it is preferred that the fluid product and/or raw material in at least two tanks of the tank farm are stored at different temperatures.

For transferring heat to the fluid in the tanks or from the fluid in the tanks to the heat transfer medium, at least two heat exchange devices may be connected in series. Alternatively, at least two heat exchange devices may be connected in parallel. Thereby, it is possible that all heat exchange devices are connected in series or that all heat exchange devices are connected in parallel. Further, it is also possible that at least two heat exchange devices are connected in series and at least two heat exchange devices are connected in parallel.

Connecting heat exchange devices in parallel has the advantage that each heat exchange device can be operated individually, if the flow of the heat transfer medium through the heat exchange devices can be stopped, for example by locating a valve upstream or downstream of each heat exchange device.

Particularly if the fluid in different tanks is stored at the same temperature, it is preferred to connect these tanks in parallel, because in this case, the heat transfer medium can be fed into the respective heat exchange devices with the same temperature. On the other hand, for storing fluid in different tanks which are connected in parallel at different temperatures, it is for example possible to set the flow rate of the heat transfer medium through the heat exchange devices, for example by using control valves.

If at least two heat exchange devices are connected in series, the heat transfer medium flows through the heat exchange devices consecutively. As the heat transfer medium transfers heat to the fluid in each tank, the heat transfer medium becomes cooler in each heat exchange device and, thus, the entrance temperature of the heat transfer medium into the heat exchange devices reduces. Therefore, it is preferred to connect tanks which are operated at different temperatures in series in such a way that during heat generation in the process apparatus, heat is transferred to the fluid in the at least two tanks being connected in series, the temperature of a tank with a heat exchange device being connected downstream to another heat exchange device is lower than the temperature of the tank with the heat exchange device being connected upstream and that during heat discharge from the tank farm, heat is transferred to the heat transfer medium from at least two tanks which are connected in series, wherein the temperature of a tank with a heat exchange device being connected downstream to another heat exchange device is higher than the temperature of the tank with the heat exchange device being connected upstream.

For individual heating or cooling of the fluid in the tanks with the heat exchange devices being connected in series, it is further preferred, if the temperature control circuit comprises bypass lines so that each of the heat exchange devices being connected in series can be bypassed. To individually operate the heat exchange devices being connected in series, it is further preferred, if each bypass line comprises a valve by which the bypass line can be closed. To operate the individual heat exchange devices, valves are preferably located upstream and/or downstream of each heat exchange device. By closing the valve upstream or downstream of a heat exchange device, the flow of the heat transfer medium is stopped and, thus, the heat exchange with the fluid in the tank. If it is intended that the whole heat transfer medium flows through the heat exchange device, the valve in the bypass line is closed simultaneously with opening the valve upstream and/or downstream the heat exchange device. On the other hand, if it is intended that only a part of the heat transfer medium flows through the heat exchange device and a part through the bypass line, both, the valve in the respective bypass line and the valve upstream and/or downstream the heat exchange device are opened. By setting the opening cross section of the valves, the flow rate of the heat transfer medium through the heat exchange device and through the bypass line can be set.

As tank farms generally are part of a chemical site, the process apparatus which is connected to the temperature control circuit is an apparatus used in a chemical process. Such apparatus may be operated continuously or discontinuously and are for example chemical reactors, evaporators, coolers, heaters, membrane modules, dryers, condensers, columns like distillation columns, or any other apparatus used in chemical processes and known to a skilled person, and the respective heat exchangers for heating or cooling the components in the chemical process. Typically, in this context, chemical reactors in which exothermic reactions are carried out and condensers are heat sources, and chemical reactors in which endothermic reactions are carried out, evaporators, heat pumps, steam generators, steam drums or distillation columns are heat sinks. However, particularly if evaporators or distillation columns are connected to the temperature control circuit, it is preferred that the evaporation temperature or the distillation temperature is below the storage temperature of the fluid in the tank of the tank farm from which the heat is transferred. If the temperature for evaporation or distillation or the temperature for carrying out an endothermal chemical reaction is above the storage temperature of the fluid in the tanks of the tank farm, an additional heating step is necessary. In the additional heating step heat may be transferred from the temperature control circuit to an expanded fluid, the fluid then is compressed, by which the pressure and hence the temperature of the fluid rises, the heat of the compressed fluid is transferred to the components in the evaporator, the distillation column or the reactor, and subsequently the fluid is expanded, thereby cooling to a temperature below the temperature of the heat transfer medium of the temperature control circuit. Alternatively, it is also possible to use a heating device, for example electrical heating, steam heating, a further heat integration by using a heat source having a higher temperature, or a burner to provide heat in the additional heating step.

Particularly preferably, the process apparatus is a chemical reactor.

Depending on the arrangement of production plants and tank farms on the chemical site, it is possible that each production plant is connected to one tank farm or that at least two production plants are connected to one tank farm. If more than one production plant is connected with one tank farm, it is preferred that the production plants are connected in parallel to the temperature control circuit and the tank farm is connected in series to the production plants. Particularly if the fluid in tanks of the tank farm is stored at different temperatures and the production plants also operate at different temperatures, it is preferred that each production plant is connected to a part of the tank farm which contains tanks with a fluid having a temperature which matches to the temperature of the production plant. However, even if the production plants are operated in corresponding temperature ranges or all tanks have the same temperature, it is preferred that a temperature control circuit connects one production plant and a part of the tanks of the tank farm.

If the process in the production plant generates more heat than can be stored in the tanks or if additional heat is needed, it is preferred to connect at least one additional heat exchange device for heat supply or heat dissipation to the temperature control circuit. In the additional heat exchange device heat can be transferred to a cooling medium for additional cooling or to a heating medium for additional heating of the process carried out in the process apparatus.

Besides the heat exchange device which is connected to the temperature control circuit, it may be preferable if each tank comprises a second heat exchange device. The second heat exchange device may be a heat exchanger which can be operated independently from the temperature control circuit or a heat exchanger which also is connected to the temperature control circuit.

Using a second heat exchange device which can be operated independently from the temperature control circuit allows for example for additional heating or cooling of the fluid in the tank. Such a second heat exchange device may be for example necessary if the heat generated in the process apparatus is not sufficient for heating the fluid in the tanks of the tank farm. "Not sufficient" here means that the amount of heat is not sufficient and/or that the temperature difference is not sufficiently high. On the other hand, such a second heat exchange device also may be used if it becomes necessary to cool the fluid in a tank at specific occasions, for example for emptying or filling the tank, and the heat sink in the temperature control circuit is not sufficient for dissipating this additional heat or there is no additional heat sink in the temperature control circuit. The same as described here for heating may also apply for cooling, if the heat consumed in the process apparatus is not sufficient for cooling the fluid in the tank or the fluid must be heated at specific occasions and there is no heat source in the temperature control circuit or the heat source does not provide sufficient heat.

If the second heat exchange devices are connected to the temperature control circuit, it is preferred that the either the heat exchange devices are used for heating and the second heat exchange devices for cooling or vice versa. In this case, the heat exchange devices and the second heat exchange devices each are connected in series, wherein it is further preferred that in the temperature control circuit an additional heat exchange device is located between the last heat exchange device and the first second heat exchange device of the respective series of heat exchange devices.

During operation of the heat storage system, for heating the fluid in at least one tank of the tank farm, heat released in the process apparatus is transferred to a heat transfer medium in the temperature control circuit, the heat transfer medium flows through the temperature control circuit to the heat exchange device of the tank in which the fluid is to be heated, or for heating the process apparatus, heat is transferred from the fluid in at least one tank of the tank farm to the heat transfer medium in the temperature control circuit, the heat transfer medium flows to the process apparatus and transfers heat to the process apparatus.

For transferring the heat released in the process apparatus to the heat transfer medium in the temperature control circuit or from the heat transfer medium in the temperature control circuit to the process apparatus, any suitable heat exchange device for an indirect heat exchange may be used. Such heat exchange devices for example are double jackets, coils arranged in the process apparatus through which the heat transfer medium flows or heat exchangers which are arranged in a fluid circuit of the process apparatus, for example a circuit where fluid is removed from the process apparatus, flows through the heat exchanger to be heated or cooled and then back into the process apparatus. In this case, heat is transferred from the circulating fluid to the heat transfer medium of the temperature control circuit in the heat exchanger, or vice versa.

The process apparatus may be operated continuously or batchwise. If the process apparatus is operated batchwise, heat only can be transferred during operation, for example if the process apparatus is a batchwise operated reactor, during carrying out a reaction in the reactor. If a continuous heating of the fluid in a tank of the tank farm is desired in such a case, it is necessary to provide the second heat exchange device by which heat can be transferred during the periods when no heat is generated in the process apparatus. As an alternative, if sufficient heat for continuously heating the fluid in the tanks of the tank farm is generated during the periods the process apparatus operates, it is possible to provide an additional heat storage, for example a fluid in another tank of the tank farm which can be heated temperature above the general storage temperature or an additional heat storage, for example a latent heat storage like a phase change material. In this case, during operation of the process apparatus, a part of the heat transfer medium is used for heating the fluid in the tank and a part of the heat transfer medium is used for transferring heat to the additional heat storage. For this purpose, the additional heat storage may be connected in parallel to the heat exchange devices or in series to the heat exchange devices, wherein for supplying sufficient heat during non-operation periods of the process apparatus the additional heat storage must be connected upstream the heat exchange device of the tank in which the fluid must be continuously heated. For continuous heating of the fluid in the tank, during non-operation of the process apparatus, heat is transferred from the additional heat storage to the heat exchange device of the tank with the fluid to be continuously heated by generating a flow of the heat transfer medium in the temperature control circuit first through the additional heat storage, where the heat transfer medium absorbs heat, and then through the heat exchange device in which the fluid must be continuously heated, in which the heat transfer medium dissipates heat to the fluid in the tank.

To avoid a heat loss, when a tank of the tank farm is emptied, it is further preferred if during emptying one tank of the tank farm, heat is transferred from the fluid in the tank to the heat transfer medium in the heat exchange device, the heat transfer medium flows to the heat exchange device of another tank and transfers the heat to the fluid in the other tank. This is particularly possible when the fluid of the tank can be withdrawn and transported or processed further at a lower temperature.

If, on the other hand, the fluid being withdrawn from a tank must be heated during emptying of the tank, it is also possible that during emptying one tank of the tank farm, heat is transferred from the fluid of at least one tank which is not emptied to the heat transfer medium, the heat transfer medium flows to the tank which is emptied and transfers the heat to the fluid being withdrawn from the tank to be emptied.

For heating or cooling the fluid of a tank during emptying the tank, it is possible to circulate the heat transfer medium through the whole temperature control circuit, or by providing a bypass which bypasses the process apparatus, to circulate the heat transfer medium only through tanks of the tank farm. To simultaneously heat a tank of the tank farm and to cool another tank of the tank farm, it is particularly preferred to provide the heat exchange device and the second heat exchange device in each tank, if the heat exchange devices are connected in series, the heat exchange device being used for heating the fluid in the tank and the second heat exchange device for cooling the fluid in the tank. In this case, during heating the fluid in the tank, the second heat exchange device is bypassed, and, during cooling, the heat exchange device is bypassed.

If the heat exchange devices are connected in parallel to the temperature control circuit, it is preferred to connect the heat exchange devices in such a way that the flowing direction of the heat transfer medium can be reversed. In this case, heat is transferred from the heat transfer medium to the fluid in the tank if the heat transfer medium flows in a first direction and heat is transferred from the fluid in the tank to the heat transfer medium, if the heat transfer medium flows in the opposite direction. However, for providing a heat storage system which allows heating one tank and cooling another tank simultaneously, it is preferred to arrange the heat exchange devices and the second heat exchange devices in series.

The first and second heat exchange devices may be any heat exchange device which allows for indirect heat exchange with the content in the respective tank. Suitable heat exchange devices for example are heat exchangers, heat coils in the respective tank, double jackets.

Particularly if it is not necessary to heat or cool the fluid in the tanks continuously, it is possible to operate the heat storage system such that during heat generation in the process apparatus heat is transferred to the fluid in at least one tank of the tank farm and the heat exchange device of at least one tank in the tank farm is bypassed until the fluid has a predefined temperature, after the fluid has reached the predefined temperature, the heat exchange devices of each tank in which the fluid was heated are bypassed and the heat exchange device of at least one tank which was bypassed is opened to heat the fluid in this tank until a predefined temperature is reached. Such an operation is particularly preferred if the heat exchange devices are connected in series and the temperature of the fluid in different tanks is the same. As an alternative to only operate one heat exchange device, it is also possible to operate more than one of the heat exchange devices being connected in series, as long as the temperature of the heat transfer medium is higher than the temperature of the fluid in the tanks, if the fluid is to be heated or as long as the temperature of the heat transfer medium is lower than the temperature of the fluid in the tank if the fluid is to be cooled. In this case, a heat exchange device is bypassed when the fluid in the tank has reached a predefined temperature. Due to bypassing a heat exchange device, the heat transfer medium flowing through the last operating heat exchange device has a higher temperature when leaving this heat exchange device, so that the following heat exchange device can be set into operation. To avoid an unintentional cooling of a fluid in a tank, it is particularly preferred that those tanks, in which the fluid has a temperature above the temperature of the heat transfer medium, the heat exchange device is bypassed. The same applies for an unintentional heating, if the temperature of a fluid in a tank is lower than the temperature of the heat transfer medium.

Embodiments of the invention are shown in the figures and described in more detail in the description below.

In the figures:
- Figure 1: shows a temperature control circuit of a process and a tank farm according to the state of the art;
- Figure 2: shows a heat storage system with heat exchange devices being connected in parallel in a first embodiment;
- Figure 3: shows a heat storage system with heat exchange devices being connected in parallel in a second embodiment;
- Figure 4: shows a heat storage system with heat exchange devices being connected in parallel in a third embodiment;
- Figure 5: shows a heat storage system with heat exchange devices being connected in series in a first embodiment;
- Figure 6: shows a heat storage system with heat exchange devices being connected in series in a second embodiment;
- Figure 7: shows a heat storage system with heat exchange devices and second heat exchange device, the second heat exchange devices not being connected to the temperature control circuit;
- Figure 8: shows a heat storage system with heat exchange devices and second heat exchange devices, the second heat exchange devices being connected to the temperature control circuit.

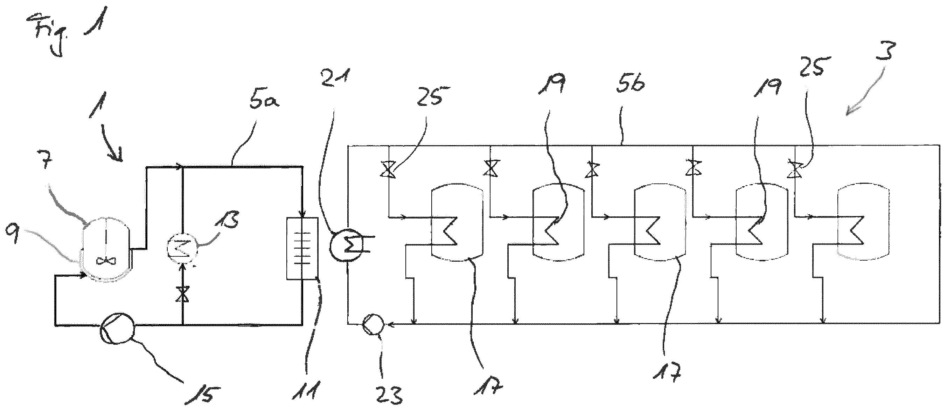

Figure 1 shows schematically a temperature control circuit and a tank farm according to the state of the art.

Usually, on industrial sites, for example chemical sites, process plants 1, for example production plants, and tank farms 3 are separated. In this case, the process plant 1 comprises a first temperature control circuit 5a and the tank farm 3 a second temperature control circuit 5b.

The process plant 1 comprises at least one process apparatus 7. If the process apparatus 7 must be heated for carrying out a process, for example an endothermic reaction or an evaporation, the process apparatus 7 is a heat sink. On the other hand, if the process apparatus 7 must be cooled for carrying out a process, for example an exothermic reaction or a condensation, the process apparatus 7 is a heat source.

For supplying heat to the process apparatus 7 in case the process apparatus 7 is a heat sink, or for removing heat from the process apparatus 7 in case the process apparatus 7 is a heat source, the process apparatus comprises a heat exchange device 9, for example a double jacket as shown here, which is connected to the first temperature control circuit 5a. For heating or cooling, a heat transfer medium flows through the heat exchange device 9. Besides a double jacket, the heat exchange device may be any device known to a skilled person by which heat from a heat transfer medium can be transferred to or from the contents in the process apparatus 7, besides the double jacket for example a heat coil, or a heat exchanger in an external fluid circuit through which the processed fluid flows for heating or cooling.

To remove the heat from the process for cooling the process apparatus 7 or for supplying heat to the process apparatus 7, it is necessary to remove or supply the heat to the temperature control circuit 5a. For this purpose, a heat exchanger 11 is connected to the temperature control circuit. The heat exchanger 11 may be, for example, a central cooling unit, if the process apparatus 7 is a heat source.

Besides the process apparatus 7, the temperature control circuit 5a may comprise an additional heat source 13. The heat generated in the additional heat source 13 also is dissipated in the heat exchanger 11. If the process apparatus 7 is a heat sink, the temperature control circuit 5a may comprise an additional heat sink instead of the additional heat source 13.

For operating the first temperature control circuit 5a, a pump 15 is comprised by which a flow of the heat transfer medium through the first temperature control circuit 5a is generated.

The tank farm 3 usually comprises at least two tanks 17. For controlling the temperature in the tanks 17 of the tank farm 3, each tank 17 is equipped with a heat exchange device 19. Usually, the heat exchange devices 19 are connected in parallel to the second temperature control circuit 5b as shown here. However, alternatively, it is also possible to connect the heat exchange devices 19 in series. If the fluid stored in the tanks 17 of the tank farm must be heated, the second temperature control circuit 5b comprises a heat exchanger 21 in which the heat transfer medium of the second temperature control circuit 5b is heated. If, on the other hand, the fluid stored in the tanks 17 must be cooled, the heat transfer medium of the second temperature control circuit 5b is cooled in the heat exchanger 21 and, thus, the heat is dissipated. For generating a flow of the heat transfer medium in the second temperature control circuit 5b, the second temperature control circuit 5b comprises a second pump 23.

For an individual heating or cooling of the fluid in the tanks 17, it is preferred, that the flow of the heat transfer medium through each of the heat exchange devices 19 can be controlled. For this purpose, usually, a valve 25 is located upstream or downstream the heat exchange device 19, by which the flow rate can be set or the flow can be stopped.

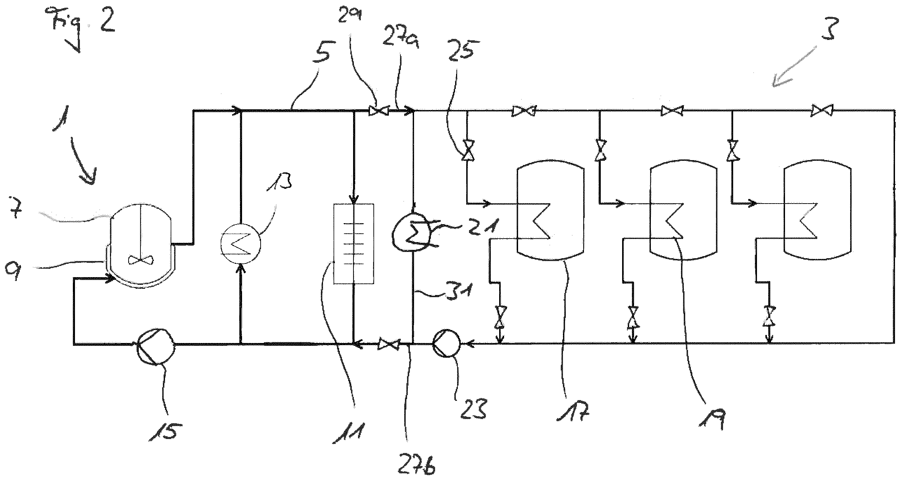

Figure 2 shows a heat storage system according to the invention with heat exchange devices being connected in parallel in a first embodiment.

In contrast to the state of the art shown in figure 1, in the heat storage system according to the invention, the first temperature control circuit 5a and the second temperature control circuit 5b are combined to one temperature control circuit 5. For this purpose, the temperature control circuit 5 comprises a first connecting line 27a and a second connecting line 27b, by which a temperature control circuit 5 is formed in which the additional heat source 13, the heat exchanger 11 and the heat exchange devices 19 all are connected in parallel.

Due to valves 29 in each connecting line 27a, 27b, and a bypass line 31, the process plant 1 and the tank farm 3 can be operated separately by closing the valves 29. In this case the temperature control circuit 5 is separated into individual temperature control circuits for the process plant 1 and the tank farm 3 as shown in figure 1.

In the case of the combined temperature control circuit 5, the heat exchanger 21 may be used for supplying additional heat, if not sufficient heat is supplied by the process apparatus for heating the fluid in the tanks 17 of the tank farm.

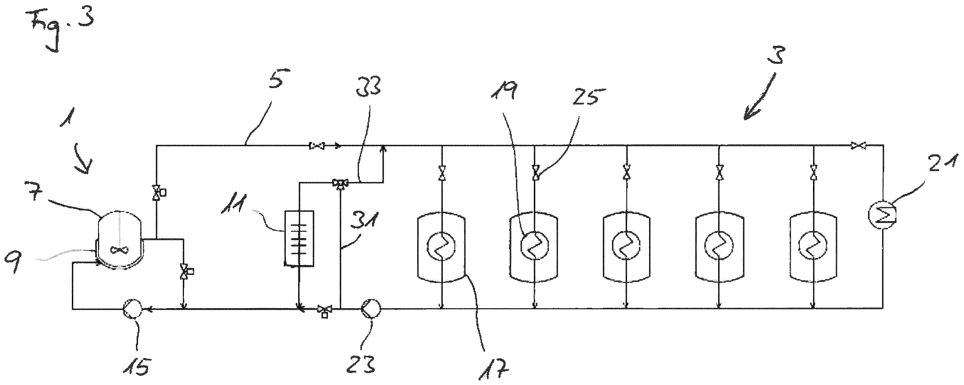

Figure 3 shows a second embodiment of a heat storage system with heat exchange devices being connected in parallel.

In difference to the heat storage system of figure 2, the temperature control circuit 5 does not comprise the additional heat source 13 and the bypass line 31 only bypasses the heat exchanger 11, but as it is connected to the line connecting the process apparatus 7 with the heat exchange devices 19 by a connecting line 33, only a separate operation of the tank farm 3 is possible, for example when the process plant 1 is shut down or the process apparatus 7 does not operate, but a separate operation of the temperature circuit of the process plant 1 and the tank farm 3 simultaneously is not possible.

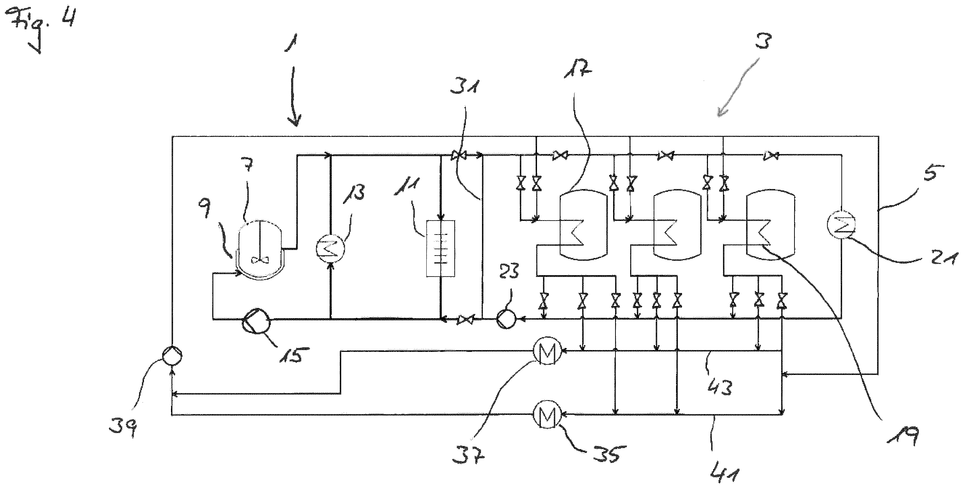

A third embodiment of a heat storage system with heat exchange devices being connected in parallel is shown in figure 4.

In the embodiment shown in figure 4, the temperature control circuit 5 comprises a low temperature heat sink 35 and a high temperature heat sink 37. Each of the heat exchange devices 19 is connected with the low temperature heat sink 35 by a line 41 and with the high temperature heat sink 37 by a line 34. Downstream the low temperature heat sink 35 and the high temperature heat sink 37, the lines through which the heat transfer medium flows combine and in the combined line a third pump 39 is located for generating a flow of the heat transfer medium.

In the low temperature heat sink 35 and the high temperature heat sink 37 heat can be dissipated, for example if the process apparatus 7 generates more heat than used for setting the temperature in the tanks 17.

The low temperature heat sink in this context means a heat sink which operates below the lowest temperature at which heat is stored in the tank farm. This does not necessarily define the lowest temperature at which liquid is stored in the tank farm but it determines the lowest temperature level at which heat can be utilized. The high temperature sink means a heat sink which operates at a higher temperature than the low temperature heat sink. Storing heat at different energy levels allows to utilize the stored heat in heat sinks at different temperatures which minimizes exergy losses. Particularly preferred heat sinks are steam generators, heat pumps and heat engines.

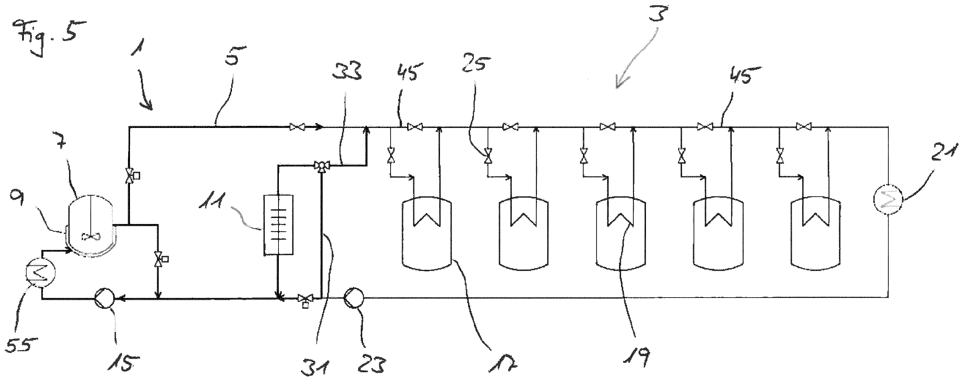

Figure 5 shows a heat storage system with heat exchange devices being connected in series in a first embodiment.

The embodiment shown in figure 5 differs from the embodiment shown in figure 3 in the connection of the heat exchange devices 19 to the temperature control circuit 5. While the heat exchange devices 19 in the embodiment shown in figure 3 are connected in parallel, the heat exchange devices 19 in the embodiment of figure 5 are connected in series.

By connecting the heat exchange devices 19 in series, in each heat exchange device 19 through which the heat transfer medium flows, heat is supplied to the fluid in the tank 17. Due to the heat supplied to the fluid in the tank 17, the heat transfer medium cools down. Thus, the connection of the heat exchange devices 19 in series particularly is suitable, if the fluid in different tanks is stored at different temperatures, wherein the heat exchange devices 19 are connected in such a way that the heat exchange device 19 being connected downstream to another heat exchange device 19 is heating the fluid in a tank 19 with a lower temperature, i.e. the heat exchange device 19 of the tank 17 with the hottest fluid is the first in the series and the heat exchange device 19 of the tank 17 with the coldest fluid is the last in the series.

In the embodiment shown in figure 5, each heat exchange device 19 can be bypassed by a bypass line 45. This has the advantage that the tanks 17 can be heated individually and the heat transfer fluid flows only through those heat exchange devices 19 which are in tanks 17 containing a fluid that needs to be heated.

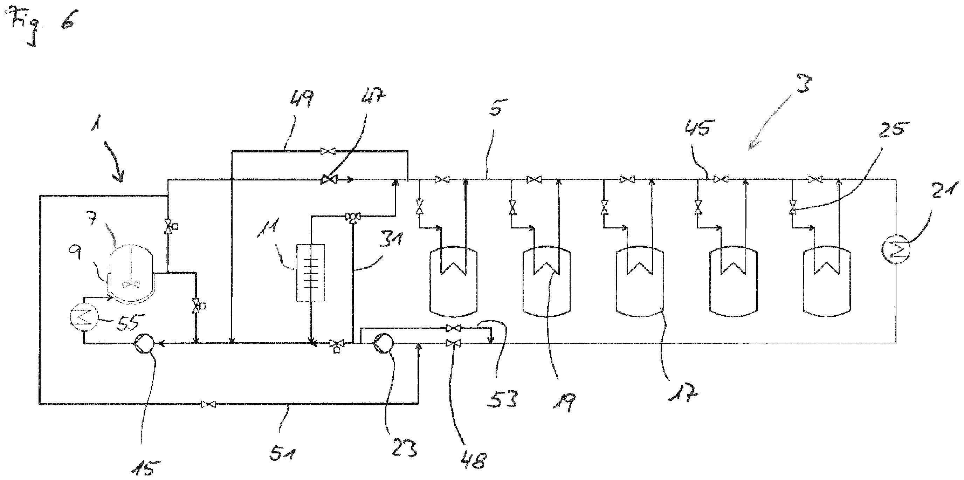

In the embodiment of figure 5, heat is supplied to the fluid in the tanks 17 of the tank farm 3. As the temperature in the tanks 17 decreases from the first tank to the last tank, it is only reasonable to use heat from one tank when heat is discharged. An embodiment that allows for transferring heat from the process apparatus 7 to the tanks 17 of the tank farm 3 and from the tanks 17 of the tank farm 3 to the process apparatus 7 is shown in figure 6.

For supplying heat from the process apparatus 7 to the heat exchange devices 19, valve 47 in the supply line 47 and valve 48 in the back line are opened and the first, second and third reverse flow lines 49, 51, 53 are closed. For closing and opening the lines, any suitable valve can be used. In this case, the flow of the heat transfer medium corresponds to the flow of the embodiment of figure 5.

For supplying heat from the fluid in the tanks 17 to the process apparatus 7, the flow must be reversed. For this purpose, the valve 47 in the supply line and the valve 48 in the back line are closed and the reverse flow lines 49, 51, 53 are opened. The fluid flows from the heat exchange device 19 in opposite direction (against the direction of the arrows) through the first reverse flow line 49 to the pump 15 and then through the heat exchange device 9. From the heat exchange device 9, the heat transfer medium flows through the second reverse flow line 51, through the second pump 23 and the third reverse flow line 53 back the heat exchange devices 19.

If the heat stored in the tanks 17 is not sufficient or additional heat needs to be supplied to the process apparatus 7, for example for start-up proceedings, an additional heat exchanger 55 may be connected to the temperature control circuit 5 upstream the process apparatus 7.

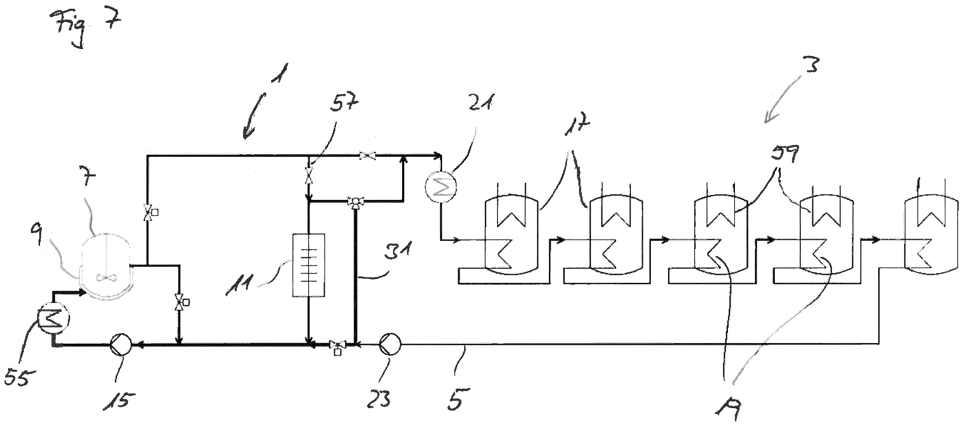

A third embodiment of a heat storage system with heat exchange devices being connected in series is shown in figure 7.

In difference to the embodiment shown in figure 5, in the embodiment of figure 7, the heat transfer medium always flows through all heat exchange devices 19, because there are no bypass lines 45 which allow bypassing a heat exchange device 19. On the other hand, the additional line 57 allows for a separate operation of the process plant 1 and the tank farm 3.

To supply additional heat if the heat generated in the process apparatus 7 is not sufficient for heating the fluid in the tanks 17, each tank is equipped with a second heat exchange device 59. Alternatively or additionally, the second heat exchange device 59 may be used for discharging heat from the fluid in the tanks 17.

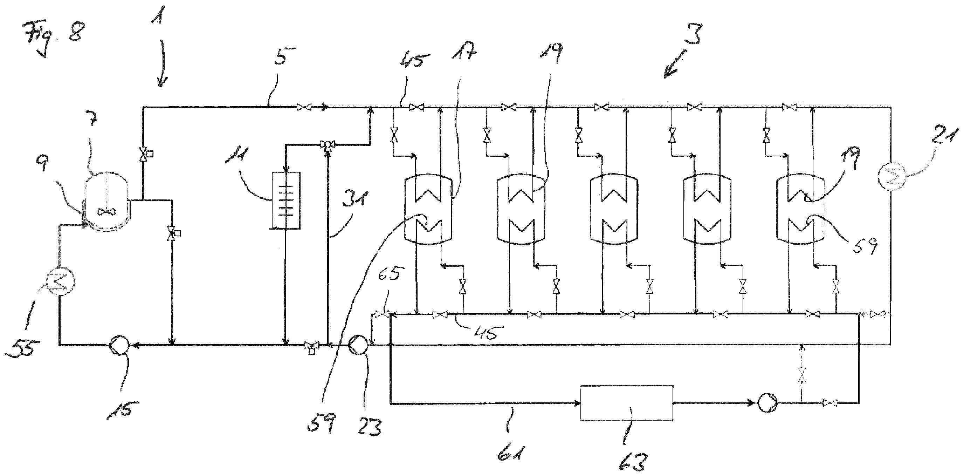

A fourth embodiment of a heat storage system with heat exchange devices being connected in series is shown in figure 8.

In difference to the embodiment shown in figure 5, in the embodiment of figure 8, each tank 17 of the tank farm 3 comprises a second heat exchange device 59. Here the second heat exchange devices 59 are connected to the temperature control circuit 5.

In the embodiment shown here, the heat exchange devices 19 are used for heating the fluid in the tanks 17 and the second heat exchange devices 59 are used for cooling. As the heat exchange devices 19, also the second heat exchange devices 59 can be bypassed by a bypass line 45. This allows to individually operate the heat exchange devices 19 and the second heat exchange devices 59 so that it is possible to heat or cool each tank individually and, particularly, to heat one tank 17 and to cool another tank 17, simultaneously.

For dissipating heat from the tank farm, the temperature control circuit 5 comprises a cooling line 61 with a heat sink 63. For dissipating heat, a valve 65 upstream the second pump 23 is operated such that at least a part of the heat transfer medium or the complete heat transfer medium flows through the heat sink 63. The heat sink 63 for example is a steam generator, a heat pump, a heat engine or a different process that consumes heat.

From the heat sink 63 the heat transfer medium may flow to the second pump 23 and then to the process apparatus 7 for absorbing heat.

By closing the respective valves in the temperature control circuit 5, it is also possible to circulate the heat transfer medium only through at least one of the second heat exchange devices 59 and the heat sink 63 for cooling the fluid in the respective tanks. If no heat needs to be dissipated, the temperature control circuit 5 may be operated as shown in figure 5.

## Claims

1. Heat storage system comprising at least one heat source, a tank farm (3) with at least two tanks (17), and at least one heat sink, wherein in the tanks (17) fluid products and/or raw materials are stored and each tank (17) comprises a heat exchange device (19), wherein the at least one heat source, the at least one heat sink and the heat exchange devices (19) are connected in one temperature control circuit (5), wherein at least one heat source or at least one heat sink is a process apparatus (7).

2. The heat storage system according to claim 1, wherein the fluid products and/or raw materials in at least two tanks (17) of the tank farm (3) are stored at different temperatures.

3. The heat storage system according to claim 1 or 2, wherein at least two heat exchange devices (19) are connected in parallel.

4. The heat storage system according to any of claims 1 to 3, wherein at least two heat exchange devices (19) are connected in series.

5. The heat storage system according to claim 4, wherein the temperature control circuit (5) comprises bypass lines (45) so that each of the heat exchange devices (19) being connected in series can be bypassed.

6. The heat storage system according to any of claims 1 to 5, wherein the process apparatus (7) is a chemical reactor.

7. The heat storage system according to any of claims 1 to 6, wherein the temperature control circuit (5) comprises at least one additional heat exchanger (21) for heat supply or heat dissipation.

8. The heat storage system according to any of claims 1 to 7, wherein each tank (17) comprises a second heat exchange device (59).

9. The heat storage system according to any of claims 1 to 8, wherein the second heat exchange devices (59) are connected to the temperature control circuit (5).

10. A process for operating a heat storage system according to any of claims 1 to 9, wherein for heating the fluid in at least one tank (17) of the tank farm (3), heat released in the process apparatus (7) is transferred to a heat transfer medium in the temperature control circuit (5), the heat transfer medium flows through the temperature control circuit (5) to the heat exchange device (19) of the tank (17) in which the fluid is to be heated, or wherein for heating the process apparatus (7), heat is transferred from the fluid in at least one tank (17) of the tank farm (3) to the heat transfer medium in the temperature control circuit (5), the heat transfer medium flows to the process apparatus (7) and transfers heat to the process apparatus (7).

11. The process according to claim 10, wherein during emptying one tank (17) of the tank farm (3), heat is transferred from the fluid in the tank (17) to the heat transfer medium in the heat exchange device (19), the heat transfer medium flows to the heat exchange device (19) of another tank (17) and transfers the heat to the fluid in the other tank (17).

12. The process according to claim 10, wherein during emptying one tank (17) of the tank farm (3), heat is transferred from the fluid of at least one tank (17), which is not emptied, to the heat transfer medium, the heat transfer medium flows to the tank (17) which is emptied and transfers the heat to the fluid being withdrawn from the tank to (17) be emptied.

13. The process according to any of claims 10 to 12, wherein during heat generation in the process apparatus (7) heat is transferred to the fluid in at least one tank (17) of the tank farm (3) and the heat exchange device (19) of at least one tank (17) in the tank farm (3) is bypassed until the fluid has a predefined temperature, after the fluid has reached the predefined temperature, the heat exchange devices (19) of each tank (17) in which the fluid was heated are bypassed and the heat exchange device (19) of at least one tank (17) which was bypassed is opened to heat the fluid in this tank (17) until a predefined temperature is reached.

14. The process according to any of claims 10 to 12, wherein during heat generation in the process apparatus (7) heat is transferred to the fluid in at least two tanks (17) which are connected in series, wherein the temperature of a tank (17) with a heat exchange device (19) being connected downstream to another heat exchange device (19) is lower than the temperature of the tank (17) with the heat exchange device (19) being connected upstream.

15. The process according to any of claims 10 to 14, wherein during heat discharge from the tank farm (3), heat is transferred to the heat transfer medium from at least two tanks (17) which are connected in series, wherein the temperature of a tank (17) with a heat exchange device (19; 59) being connected downstream to another heat exchange device (19; 59) is higher than the temperature of the tank (17) with the heat exchange device being connected upstream.
